# EUROPÄISCHE PATENTSCHRIFT

(11) **EP 2 572 949 B1**
(45) Veröffentlichungstag und Bekanntmachung des Hinweises auf die Patenterteilung: **04.09.2019**
(21) Anmeldenummer: 12185295.8
(22) Anmeldetag: 20.09.2012
(51) Int. Cl.: B60T 13/38, B60T 15/02, B60T 15/04

(54) **Bremssteuerventil zur Ausgabe eines bistabilen Bremssteuerdruckes**
Brake control valve for outputting a bi-stable braking control pressure
Soupape de distribution de freinage pour l'émission d'une pression de commande de freinage bistable

(30) Priorität: 22.09.2011 DE 102011114070
(43) Veröffentlichungstag der Anmeldung: 27.03.2013
(73) Patentinhaber: KNORR-BREMSE Systeme für Nutzfahrzeuge GmbH, 80809 München (DE)
(72) Erfinder: Leinung, Andreas, 81245 München (DE); Schnittger, Karssten, 80935 München (DE); Wyen, Stefan, 80937 München (DE)
(74) Vertreter: Mattusch, Gundula

(56) Entgegenhaltungen:
- EP-A2- 2 239 174
- US-A- 4 176 687

## Beschreibung

Die Erfindung betrifft ein Bremssteuerventil zur Ausgabe eines bistabilen Bremssteuerdruckes und eine Feststellbremse für ein Nutzfahrzeug mit dem Bremssteuerventil.

Aus der EP 2 239 174 ist ein Bremssteuerventil zur Ausgabe eines bistabilen Bremssteuerdruckes bekannt. Das Bremssteuerventil umfasst einen Kanal mit einem in den Kanal führenden Versorgungsanschluss, einem in den Kanal führenden Entlüftungsanschluss und einem in den Kanal führenden Bremssteuerdruckanschluss. Dabei ist der Bremssteuerdruckanschluss in Richtung des Kanals gesehen vor oder hinter dem Versorgungsanschluss und dem Entlüftungsanschluss angeordnet. Daher sind zwei verschiedene Ventilsitze notwendig, um den bistabilen Bremssteuerdruck mit einem Schaltelement zu erzeugen.

Aus der DE 195 27 764 A1 ist ein hydraulisches Mischventil bekannt. Das Ventil weist ebenfalls einen Kanal mit drei Öffnungen auf. Eine der Öffnungen ist als Einlass ausgebildet, in einer Richtung des Kanals betrachtet, zwischen den beiden anderen als Auslass ausgebildeten Öffnungen angeordnet ist. Die beiden Auslässe sind vom Einlass über je einen Ventilsitz getrennt, wobei zwischen den beiden Ventilsitzen ein verschiebliches Schaltelement aufgenommen ist. Je nach Lage des verschieblichen Schaltelementes wird ein dem Mischventil zugeführtes Medium unterschiedlich auf die beiden Auslässe aufgeteilt.

Es ist Aufgabe der Erfindung das eingangs genannte Bremssteuerventil zur Ausgabe eines bistabilen Bremssteuerdruckes zu verbessern.

Die Aufgabe wird mit Merkmalen der unabhängigen Ansprüche gelöst. Bevorzugte Weiterbildungen sind Gegenstand der abhängigen Ansprüche.

Gemäß einem Aspekt der Erfindung umfasst ein Bremssteuerventil zur Ausgabe eines bistabilen Bremssteuerdruckes einen Kanal mit einem in den Kanal führenden Versorgungsanschluss, einem in den Kanal führenden Entlüftungsanschluss und einem in den Kanal führenden Bremssteuerdruckanschluss zwischen dem Versorgungsanschluss und dem Entlüftungsanschluss, wobei der Entlüftungsanschluss vom Bremssteuerdruckanschluss über einen Ventilsitz getrennt ist, ein Schaltelement zum Verschließen des Ventilsitzes, und einen über einen selbsthemmenden Trieb mit dem Schaltelement gekoppelten Elektromotor zum Bewegen des Schaltelementes gegenüber dem Ventilsitz, so dass der Bremssteuerdruck basierend auf der Anlage des Schaltelementes am Ventilsitz bistabil ist.

Dem angegebenen Bremssteuerventil liegt die Überlegung zugrunde, dass in einem Nutzfahrzeug eine Feststellbremse aktiv durch einen Bremssteuerdruck beaufschlag werden muss, um gelöst zu werden. Der entsprechende Bremssteuerdruck sollte daher derart bistabil sein, dass er entweder einen ausreichend hohen Druckwert aufweist, um die Feststellbremse zu lösen, oder einen ausreichend niedrigen Druckwert aufweist, um die Feststellbremse zu schließen. Diese beiden Werte sollten ausreichend voneinander beabstandet sein.

Im Rahmen des angegebenen Bremssteuerventils wird dabei erkannt, dass zur Beeinflussung des Bremssteuerdruckes ein Versorgungsdruckanschluss und ein Entlüftungsanschluss zur Verfügung steht, wobei der Bremssteuerdruck mit dem Versorgungsdruckanschluss gekoppelt werden kann, wenn der Bremssteuerdruck auf den ausreichend hohen Druckwert gesetzt werden soll und mit dem Entlüftungsanschluss gekoppelt werden kann, wenn der Bremssteuerdruck auf den ausreichend niedrigen Druckwert gesetzt werden soll. Die Kopplung eines entsprechenden Bremssteuerdruckanschlusses mit dem Versorgungsdruckanschluss oder dem Entlüftungsanschluss erfolgt im eingangs genannten Bremssteuerventil basierend auf zwei verschiedenen in den Bremssteuerdruckanschluss führenden Kanälen zwischen denen mit einem einzigen Schaltelement umgeschaltet werden kann.

Da der Versorgungsanschluss und der Entlüftungsanschluss im eingangs genannten Bremssteuerventil vom Bremssteuerdruckanschluss aus gesehen auf derselben Seite des Kanals angeordnet sind, müssen jedoch vom Bremssteuerdruckanschluss aus gesehen zwingend zwei Ventilsitze vorgesehen auf derselben Seite des Schaltelementes sein, um die beiden zuvor genannten Kanäle voneinander zu trennen. In dieser Konstellation wird der Bremssteuerdruckanschluss auch dann hart zwischen dem Versorgungsanschluss und dem Entlüftungsanschluss umgeschaltet, wenn Schaltelement beispielsweise im Stand des Nutzfahrzeuges unbeabsichtigt durch Erschütterungen oder andere Vibrationen bewegt wird. Das heißt, dass sich die Feststellbremse unbeabsichtigt lösen und das Nutzfahrzeug wegrollen kann.

Demgegenüber liegt dem angegebenen Bremssteuerventil die Idee zugrunde, dass der Bremssteuerdruckanschluss in einer Anordnung zwischen dem Versorgungsanschluss und dem Entlüftungsanschluss nicht mehr hart zwischen dem Versorgungsanschluss und dem Entlüftungsanschluss umgeschaltet wird. Weil der Versorgungsanschluss über den Entlüftungsanschluss entlüftet wird, sollte das Schaltelement zwischen beiden Anschlüssen angeordnet sein. Auf diese Weise kann der Bremssteuerdruckanschluss nicht mehr ungewollt mit Druck beaufschlagt werden, wenn sich das Schaltelement nur leicht ungewollt vom Versorgungssanschluss wegbewegt.

In der zuvor genannten Anordnung des Bremssteuerdruckanschluss zwischen dem Versorgungsanschluss und dem Entlüftungsanschluss ist ferner prinzipiell nur ein einziger Ventilsitz notwendig, um ein technisch funktionierendes Bremssteuerventil bereitzustellen. Somit ist gegenüber dem eingangs genannten Bremssteuerventil ein technisch vereinfachtes Bremssteuerventil geschaffen, das zudem auch noch ein verbessertes Failsafe-Verhalten zeigt.

Zwar ist wie bereits gesagt prinzipiell kein weiterer Ventilsitz notwendig, um ein funktionierendes angegebenes Bremssteuerventil bereitzustellen, in einer Weiterbildung des angegebenen Bremssteuerventils ist dennoch ein weiterer Ventilsitz vorhanden, der den Bremssteuerdruckanschluss und den Versorgungsanschluss voneinander trennt und in einer Verschieberichtung des Schaltelementes beabstandet vom Ventilsitz angeordnet ist. Mit dem weiteren Ventilsitz kann der Versorgungsanschluss pneumatisch vom Bremssteuerdruckanschluss und vom Entlüftungsanschluss getrennt werden, so dass ein Kurzschluss des Versorgungsanschlusses und des Entlüftungsanschlusses im Normalbetrieb vermieden werden kann.

In einer besonderen Weiterbildung des angegebenen Bremssteuerventils ist das Schaltelement dabei zwischen dem Ventilsitz und dem weiteren Ventilsitz angeordnet.

In einer anderen Weiterbildung umfasst das angegebene Bremssteuerventil ein Rückstellelement zum Abstützen des Schaltelementes gegenüber dem Kanal und/oder dem selbsthemmenden Trieb vor einem Anschlag am Ventilsitz. Der Weiterbildung liegt die Überlegung zugrunde, dass der das Schaltelement bewegende Elektromotor abgeschaltet werden könnte, wenn das Schaltelement am Ventilsitz anschlägt. Dazu könnte entweder die Kraft, mit der der Elektromotor das Schaltelement gegen den Ventilsitz drückt oder eine Aufnahmeleistung des Elektromotors beispielsweise in Form eines elektrischen Stromes erfasst werden. Bei Überschreiten einer bestimmten Schwelle könnte dann der Elektromotor abgeschaltet werden. Das Rückstellelement begrenzt dabei den Anstieg der Kraft und/oder des Stromes beim Anschlag des Schaltelementes an den Ventilsitz und reduziert so die mechanischen Belastungen. Zudem kann die Regelung zum Abschalten des Elektromotors weniger zeitkritisch ausgelegt werden.

Die zuvor genannte Weiterbildung kann analog am weiteren Ventilsitz ebenfalls durchgeführt werden. Dabei können das zum Ventilsitz gerichtete Rückstellelement vom zum weiteren Rückstellelement gerichteten Ventilsitz verschieden ausgebildet sein, um die Unterschiede zwischen den beiden Ventilsitzen messtechnisch erfassbar zu machen.

Zwar kann/können das Rückstellelement/die Rückstellelemente das Schaltelement direkt im Kanal gegenüber den Ventilsitzen abstützen, in einer besonderen Weiterbildung ist das Rückstellelement in einem Käfig aufgenommen, der zwischen dem selbsthemmenden Trieb und dem Schaltelement angeordnet ist. Auf diese Weise können zwischen dem Schaltelement und den Ventilsitzen Dichtelemente angeordnet werden, mit denen die Anschlüsse durch das Schaltelement pneumatisch dicht verschlossen werden können, wobei die Rückstellelemente das pneumatisch dichte Verschließen nicht behindern würden.

In einer besonderen Weiterbildung des angegebenen Bremssteuerventils ist das Rückstellelement insbesondere im Käfig vorgespannt. Durch das Vorspannen des Rückstellelementes wird nach dem Anschlagen des Schaltelementes an den Ventilsitz die notwendige Kraft zum weiteren Betrieb des Elektromotors schlagartig erhöht, so dass der Anschlag des Schaltelementes aufgrund des entsprechenden Kraft- und/oder Stromsprunges eindeutiger und präziser erfassbar ist.

In einer bevorzugten Weiterbildung des angegebenen Bremssteuerventils umfasst der Käfig einen Anschlag, der eine relative Bewegung des Schaltelementes zum Käfig begrenzt. Mit dem Anschlag wird die maximale Stauchung des Rückstellelementes begrenzt, so dass ab dieser maximalen Stauchung dann die volle Druckkraft durch den Elektromotor als Dichtwirkung zwischen dem Schaltelement und dem Ventilsitz beziehungsweise dem weiteren Ventilsitz zum Tragen kommt.

In einer anderen Weiterbildung des angegebenen Bremssteuerventils ist der selbsthemmende Trieb ein Spindeltrieb. Im Rahmen der oben genannten Überlegungen zum angegebenen Bremssteuerventil zeigt sich, dass das weitergebildete Bremssteuerventil bei einem unbeabsichtigen Lösen des Schaltelementes vom weiteren Ventilsitz, was also zu einem Öffnen des Versorgungsanschlusses gegenüber dem Bremssteuerdruckanschluss und dem Entlüftungsanschluss führt, in besonders effektiver Weise ein unbeabsichtiges Lösen der Feststellbremse verhindert. Im abgestellten Zustand des Nutzfahrzeuges wird in der Regel ein Versorgungsdruck vorgehalten, damit dieser nach dem Starten des Nutzfahrzeuges sofort zur Verfügung steht. Wird der Versorgungsdruckanschluss beim Lösen des Schaltelementes vom weiteren Ventilsitz geöffnet, so verhindert der selbsthemmende Trieb, der insbesondere als Spindeltrieb ausgebildet sein kann, dass die das Lösen des Schaltelementes verursachenden Rüttelkräfte das Schaltelement schlagartig zum Entlüftungsanschluss bewegen und diesen verschließen. Der Versorgungsanschluss bleibt daher über einen genügend langen Zeitraum gegenüber dem Entlüftungsanschluss kurzgeschlossen, so dass der am Versorgungsanschluss angeschlossene Druckspeicher entleert wird. Selbst wenn nun der Entlüftungsanschluss unerwarteter Weise dennoch verschlossen werden solle, kann sich dann am Bremssteuerdruckanschluss aufgrund des entleerten Druckspeichers kein pneumatischer Druck mehr aufbauen, was die Failsafe Eigenschaften des angegebenen Bremssteuerventils weiter steigert.

In einer noch anderen Weiterbildung umfasst das angegebene Bremssteuerventil eine den Ventilsitz aufweisende Buchse zum Trennen des Bremssteuerdruckanschlusses vom Entlüftungsanschluss. Eine derartige Buchse kann nach einem Bohren des Kanals in ein Gehäuse in einfacher Weise nachträglich in den Kanal zum Trennen des Bremssteuerdruckanschlusses von einem der beiden anderen Anschlüsse eingebracht werden.

Gemäß einem weiteren Aspekt umfasst die Erfindung eine Feststellbremse für ein Nutzkraftfahrzeug, die eingerichtet ist, das Nutzfahrzeug basierend auf einem bistabilen Bremssteuerdruck zu lösen, ein angegebenes Bremssteuerventil zum Ausgeben des bistabilen Bremssteuerdruckes.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine schematische Darstellung eines Bremssteuerventils, und
Fig. 2 eine Gegenüberstellung einer axialen Lage eines Schaltelementes in einem Bremssteuerdruckraum des Bremssteuerventils und einer Antriebskraft des Schaltelementes zeigen.

In den Figuren werden gleiche technische Elemente mit gleichen Bezugszeichen versehen und nur einmal beschrieben.

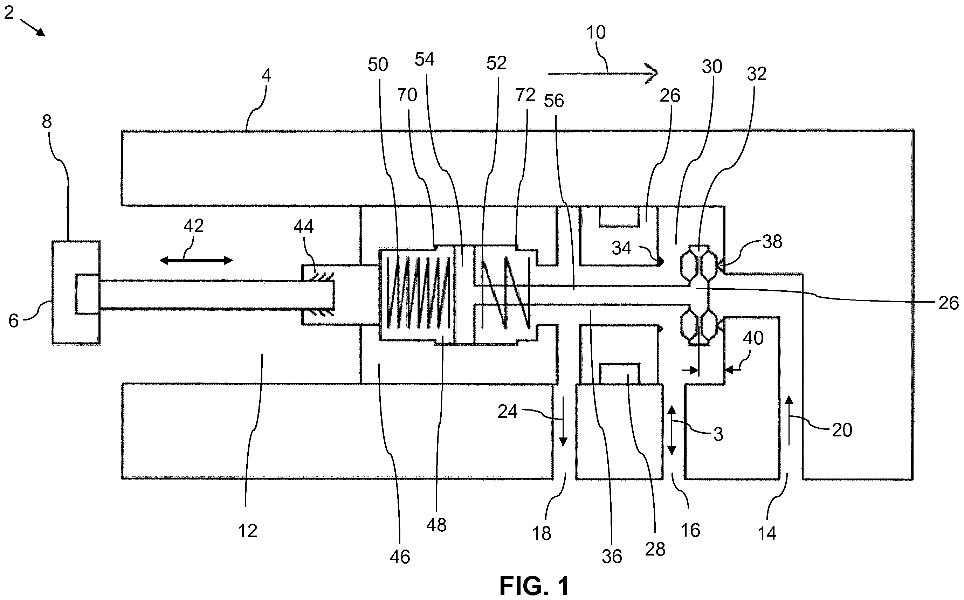

Es wird auf Fig. 1 Bezug genommen, die eine schematische Darstellung eines Bremssteuerventils 2 zeigt. Das Bremssteuerventil 2 ist in der vorliegenden Ausführung zur Ansteuerung einer nicht weiter dargestellten und dem Fachmann bekannten Feststellbremse eines nicht weiter dargestellten Nutzfahrzeuges mit einem Bremssteuerdruck 3 vorgesehen. Mit dem Bremssteuerdruck 3 soll die Feststellbremse gelöst werden, die ohne den Bremssteuerdruck 3 angezogen ist.

Das dargestellte Bremssteuerventil 2 umfasst ein Ventilgehäuse 4 und einen Elektromotor 6, der über einen elektrischen Anschluss 8 elektrisch ansteuerbar ist.

Das Ventilgehäuse 4 weist in einer axialen Richtung 10 betrachtet einen axialen Aufnahmeraum 12 in Form einer Sacklochbohrung auf. An einem axialen Ende des axialen Aufnahmeraumes 12 ist dieser über drei axial voneinander Anschlüsse 14, 16, 18 nach außen hin geöffnet. Über den ersten, Versorgungsanschluss 14 bezeichneten Anschluss wird dabei an den Aufnahmeraum 12 ein Versorgungsdruck 20 angelegt. Axial vor dem Versorgungsanschluss 14 kann der Bremssteuerdruck 3 aus dem Aufnahmeraum 12 über den zweiten als Bremssteuerdruckanschluss 16 bezeichneten Anschluss abgegriffen werden. Der dritten, als Entlüftungsanschluss 18 bezeichnete Anschluss öffnet den Aufnahmeraum 12 gegenüber einem Umgebungsdruck 24. Dabei ist der Bremssteuerdruckanschluss 16 vom Entlüftungsanschluss 18 über eine hülsenförmige Buchse 26 getrennt, die mit einer O-Ring-Dichtung 28 den Aufnahmeraum 12 axial vor der Buchse 26 gegenüber dem Aufnahmeraum 12 axial hinter der Buchse 26 pneumatisch abdichtet. Der Aufnahmeraum 12 axial hinter der Buchse 26 soll nachstehend der Einfachheit halber als Bremsteuerdruckraum 30 bezeichnet werden.

Der Bremssteuerdruck 3 wird im Bremssteuerdruckraum 30 durch Belüften mit dem Versorgungsdruck 20 und Entlüften auf den Umgebungsdruck 24 eingestellt. Der eingestellte Bremssteuerdruck 3 kann dann über den Bremssteuerdruckanschluss 16 aus dem Bremssteuerdruckraum 30 abgegriffen werden.

Zur Steuerung der Belüftung und Entlüftung des Bremssteuerdruckraumes 30 ist ein Schaltelement 32 vorgesehen, das axial zwischen dem axialen Boden des Aufnahmeraumes 12 und der Buchse 26 verschieblich angeordnet ist. Zum Belüften des Bremssteuerdruckraumes 30 wird das Schaltelement 32 axial an einen ersten Ventilsitz 34 angelegt, der axial an der Buchse 26 angeordnet ist. Auf diese Weise wird eine durch die Buchse 26 führende und den Entlüftungsanschluss 18 freilegende Öffnung 36 aus dem Bremssteuerdruckraum 30 über das Schaltelement 32 verschlossen, so dass der Bremssteuerdruckraum 30 mit dem Versorgungsdruck 20 aus dem Versorgungsanschluss 14 beaufschlagt wird. Demgegenüber wird das Schaltelement 32 zum Entlüften des Bremssteuerdruckraumes 30 axial an einen am axialen Boden des Aufnahmeraumes 12 angeordneten zweiten Ventilsitz 38 angelegt, so dass der Versorgungsanschluss 14 verschlossen und der Bremssteuerdruckraum 30 zum Entlüftungsanschluss 18 über die Öffnung 36 geöffnet und entlüftet wird.

Eine axiale Lage 40 des Schaltelementes 32 im Bremssteuerdruckraum 30 steuert damit den Bremssteuerdruck 3, denn solange der erste Ventilsitz 34 verschlossen ist, liegt der Versorgungsdruck 20 am Bremssteuerdruckraum 30 an gibt somit den Bremssteuerdruck 3 vor. Wird das Schaltelement 32 vom ersten Ventilsitz 34 wegbewegt, dann wird der Versorgungsanschluss 14 schaltungstechnisch gesehen mit dem Entlüftungsanschluss 18 zunächst kurzgeschlossen, so dass der Druck im Bremssteuerdruckraum 30 und somit der Bremssteuerdruck 3 auf den Umgebungsdruck 24 gelegt wird. Der zweite Ventilsitz 38 beeinflusst daher schaltungstechnisch gesehen nicht den Bremssteuerdruck 3 sondern verhindert lediglich, dass sich der Versorgungsdruck 20 über den Entlüftungsanschluss 18 entläd. Damit kann dem Bremssteuerdruckanschluss 16 in erster Näherung ein bistabiler Bremssteuerdruck 3 entnommen werden, der entweder vom Versorgungsdruck 20 oder vom Umgebungsdruck 24 vorgegeben wird.

Zur Steuerung des Schaltelementes 32 ist der Elektromotor 6 vorgesehen, der eine von der gewünschten Bewegungsrichtung des Schaltelementes 32 abhängige Antriebskraft 42 auf das Schaltelement 32 überträgt. Dazu wird die Antriebskraft 42 vom Elektromotor 6 über einen nur schematisch dargestellten linearen Spindeltrieb 44 auf einen Käfig 46 mit einem Innenraum 48 übertragen, in dem eine erste Feder 50 und eine zweite Feder 52 angeordnet sind. Die beiden Federn 50, 52 klemmen im Innenraum 48 des Käfigs 46 einen Teller 54 ein, der über einen Stab 56 steif mit dem Schaltelement 32 verbunden ist. Auf diese Weise wird die Antriebskraft 42 vom Elektromotor 6 über den Spindeltrieb 44, den Käfig 46, den im Käfig 46 über die Federn 50, 52 gehaltenen Teller 54 und den Stab 56 auf das Schaltelement 32 übertragen.

Die Bewegung des Schaltelementes 32 kann in jeder beliebigen Weise gesteuert werden. Vorzugsweise wird die Bewegung des Schaltelementes 32 manuell gestartet. Beispielsweise kann ein Fahrer des nicht weiter dargestellten Nutzfahrzeuges das Lösen der Feststellbremse oder das Anziehen der Feststellbremse über ein geeignetes nicht weiter dargestelltes Eingabeglied starten. Beim Lösen der Feststellbremse kann das Schaltelement 32 den Entlüftungsanschluss 18 und damit die Öffnung 36 verschließen, während es beim Anziehen der Feststellbremse den Versorgungsanschluss 14 verschließen kann. Um den Verschluss möglichst pneumatisch dicht auszugestalten, können am Schaltelement 32 entsprechend nicht näher referenzierte Dichtelemente angeordnet sein. Zum Anhalten der Bewegung des Schaltelementes 32 soll in der vorliegenden Ausführung erfasst werden, wann das Schaltelement 32 an einen der Ventilsitze 34, 38 anschlägt. Dies äußert sich in einer erhöhten Antriebskraft 42 für das Schaltelement 32 oder einem von der Antriebskraft 42 abhängigen elektrischen Strom, zur Versorgung des Elektromotors 6.

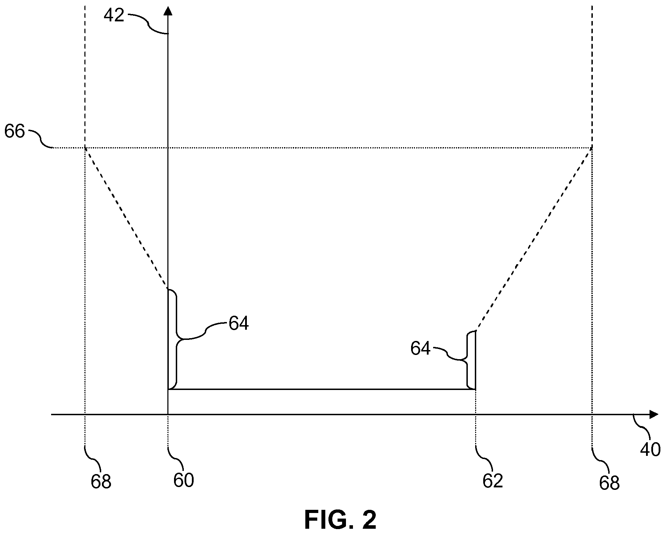

Um den Anschlag des Schaltelementes an einem der Ventilsitze 34, 38 einerseits möglichst mechanisch belastungsarm, andererseits aber messtechnisch präzise erfassbar auszugestalten, sind die Federn 50, 52 vorgesehen. Deren Wirkungsprinzip soll nachstehend anhand der Fig. 2 näher erläutert werden, in der die axiale Lage 40 des Schaltelementes 32 im Bremssteuerdruckraum 30 der Antriebskraft 42 gegenübergestellt ist.

Wie bereits gesagt ist der Teller 54 im Innenraum 48 des Käfigs 46 zwischen den Federn 50, 52 eingeklemmt. Dabei sind beide Federn 50, 52 in einer anschlagsfreien Lage des Schaltelementes 32 zwischen einer ersten Anschlagsposition 60 am ersten Ventilsitz 34 und einer zweiten Anschlagsposition 62 am zweiten Ventilsitz 38 im Käfig 46 mechanisch vorgespannt. Dies hat zu Folge, dass sich der Elektromotor 6 trotz eines Anschlages des Schaltelementes 32 an einem der Ventilsitze 34, 38 mit einem Sprung 64 in der Antriebskraft 42 weiterdrehen kann. Diese vom Elektromotor 6 aus gesehene virtuelle Bewegung des Schaltelementes 32 ist in Fig. 2 mit gestrichelten Linien angedeutet, da das Schaltelement 32 diese Bewegung nicht tatsächlich durchführt. Die notwendige Antriebskraft 42 zum Weiterdrehen des Elektromotors 6 nimmt dann basierend auf den Federkonstanten der Federn 50, 52 zum bis diese bei einer maximalen Antriebskraft 66 vollständig gestaucht sind und selbst mit einer beliebig hohen Antriebskraft 42 nicht weiter bewegt werden können. An dieser Stelle hat das Schaltelement 32 vom Elektromotor 6 aus gesehen eine maximale virtuelle Lage 68. Wird damit einer der Anschläge 60, 62 durch einen entsprechenden Sprung 64 in der Antriebskraft erreicht, hat eine nicht weiter dargestellte Steuerung den gestrichelt dargestellten virtuellen Verlauf der Lage des Schaltelementes 32 Zeit, den Elektromotor 6 abzuschalten, bevor die Antriebskraft 42 unkontrollierbar groß wird.

Um eine vollständige Stauchung der Federn 50, 52 zu vermeiden, sind im Käfig 46 für den Teller 54 Anschläge 70, 72 vorgesehen, bei denen die maximale virtuelle Lage 68 schon vor der vollständigen Stauchung der Federn 50, 52 erreicht wird.

## Patentansprüche

1. Bremssteuerventil (2) zur Ausgabe eines bistabilen Bremssteuerdruckes (3), umfassend
- einen Kanal (12) mit einem in den Kanal (12) führenden Versorgungsanschluss (14), einem in den Kanal (12) führenden Entlüftungsanschluss (18) und einem in den Kanal (12) führenden Bremssteuerdruckanschluss (16) zwischen dem Versorgungsanschluss (14) und dem Entlüftungsanschluss (18), wobei der Entlüftungsanschluss (18) vom Bremssteuerdruckanschluss (16) über einen Ventilsitz (34) getrennt ist,
- ein Schaltelement (32) zum Verschließen des Ventilsitzes (34), und
- einen über einen selbsthemmenden Trieb (44) mit dem Schaltelement (32) gekoppelten Elektromotor (6) zum Bewegen des Schaltelementes (32) gegenüber dem Ventilsitz (34), so dass der Bremssteuerdruck (3) basierend auf der Anlage des Schaltelementes (32) am Ventilsitz (34) bistabil ist.

2. Bremssteuerventil (2) nach Anspruch 1, umfassend einen weiteren Ventilsitz (38), der den Bremssteuerdruckanschluss (16) und den Versorgungsanschluss (14) voneinander trennt und in einer Verschieberichtung (40) des Schaltelementes (32) beabstandet vom Ventilsitz (34) angeordnet ist.

3. Bremssteuerventil (2) nach Anspruch 2, wobei das Schaltelement (32) zwischen dem Ventilsitz (34) und dem weiteren Ventilsitz (38) angeordnet ist.

4. Bremssteuerventil (2) nach einem der vorstehenden Ansprüche, umfassend ein Rückstellelement (50) zum Abstützen des Schaltelementes (32) gegenüber dem Kanal (12) und/oder dem selbsthemmenden Trieb (44) vor einem Anschlag am Ventilsitz (34).

5. Bremssteuerventil (2) nach Anspruch 4, wobei das Rückstellelement (50) in einem Käfig (46) aufgenommen ist, der zwischen dem selbsthemmenden Trieb (44) und dem Schaltelement (32) angeordnet ist.

6. Bremssteuerventil (2) nach Anspruch 5, wobei der Käfig (46) einen Anschlag (70) umfasst, der eine relative Bewegung (40) des Schaltelementes (32) zum Käfig (46) begrenzt.

7. Bremssteuerventil (2) nach einem der vorstehenden Ansprüche 4 bis 6, wobei das Rückstellelement (50) insbesondere im Käfig (46) vorgespannt ist.

8. Bremssteuerventil (2) nach einem der vorstehenden Ansprüche, wobei der selbsthemmende Trieb (44) ein Spindeltrieb ist.

9. Bremssteuerventil (2) nach einem der vorstehenden Ansprüche, umfassend eine den Ventilsitz (34) aufweisende Buchse (26) zum Trennen des Bremssteuerdruckanschlusses (16) vom Entlüftungsanschluss (18).

10. Feststellbremse für ein Nutzkraftfahrzeug, die eingerichtet ist, das Nutzfahrzeug basierend auf einem bistabilen Bremssteuerdruck (3) zu lösen umfassend ein Bremssteuerventil (2) nach einem der vorstehenden Ansprüche zum Ausgeben des bistabilen Bremssteuerdruckes (3).

## Claims

1. Brake control valve (2) for outputting a bistable brake control pressure (3), comprising
- a passage (12) with a supply port (14) leading into the passage (12), a vent port (18) leading into the passage (12) and a brake control pressure port (16) leading into the passage (12) between the supply port (14) and the vent port (18), wherein the vent port (18) is separated from the brake control pressure port (16) by a valve seat (34),
- a switching element (32) for closing the valve seat (34), and
- an electric motor (6) coupled to the switching element (32) via a self-locking drive (44) for moving the switching element (32) with respect to the valve seat (34), so that the brake control pressure (3) is bistable based on the contact of the switching element (32) on the valve seat (34).

2. Brake control valve (2) according to claim 1, comprising a further valve seat (38), which separates the brake control pressure port (16) and the supply port (14) from each other and is located at a distance from the valve seat (34) in a displacement direction (40) of the switching element (32).

3. Brake control valve (2) according to claim 2, wherein the switching element (32) is located between the valve seat (34) and the further valve seat (38).

4. Brake control valve (2) according to any of the preceding claims, comprising a return element (50) for supporting the switching element (32) against the passage (12) and/or the self-locking drive (44) in front of a stop at the valve seat (34).

5. Brake control valve (2) according to claim 4, wherein the return element (50) is accommodated in a cage (46) located between the self-locking drive (44) and the switching element (32).

6. Brake control valve (2) according to claim 5, wherein the cage (46) comprises a stop (70), which limits a relative movement (40) of the switching element (32) and the cage (46).

7. Brake control valve (2) according to any of the preceding claims 4 to 6, wherein the return element (50) is preloaded in he cage (46) in particular.

8. Brake control valve (2) according to any of the preceding claims, wherein the self-locking drive (44) is a screw drive.

9. Brake control valve (2) according to any of the preceding claims, comprising a bushing (26) having the valve seat (34) for separating the brake control pressure port (16) from the vent port (18).

10. Parking brake for a commercial vehicle, configured to release the commercial vehicle on the basis of a bistable brake control pressure (3), comprising a brake control valve (2) according to any of the preceding claims for outputting the bistable brake control pressure (3).

## Revendications

1. Soupape (2) de commande de frein pour sortir une pression (3) de commande de frein bistable, comprenant
- un conduit (12) ayant un raccord (14) d'alimentation menant au conduit (12), un raccord (18) de purge menant au conduit (12) et un raccord (16) de pression de commande de frein menant au conduit (12) entre le raccord (14) d'alimentation et le raccord (18) de purge, le raccord (18) de purge étant séparé du raccord (16) de pression de commande de frein par un siège (34) de soupape,
- un élément (32) de manoeuvre pour fermer le siège (34) de soupape, et
- un moteur (6) électrique accouplé à l'élément (32) de manoeuvre par une transmission (44) autobloquante pour déplacer l'élément (32) de manoeuvre par rapport au siège (34) de la soupape, de manière à ce que la pression (3) de commande de frein, reposant sur l'application de l'élément (32) de manoeuvre au siège (34) de la soupape, soit bistable.

2. Soupape (2) de commande de frein suivant la revendication 1, comprenant un autre siège (38) de soupape, qui sépare l'un de l'autr le raccord (16) de pression de commande de frein et le raccord (14) d'alimentation et qui est disposé à distance, dans une direction (40) de déplacement de l'élément (32) de manoeuvre, du siège (34) de la soupape.

3. Soupape (2) de commande de frein suivant la revendication 2, dans laquelle l'élément (32) de manoeuvre est disposé entre le siège (34) de la soupape et l'autre siège (38) de la soupape.

4. Soupape (2) de commande de frein suivant l'une des revendications précédentes, comprenant un élément (50) de rappel pour appuyer l'élément (32) de manoeuvre sur le conduit (12) et/ou sur la transmission (44) autobloquante avant une butée sur le siège (34) de la soupape.

5. Soupape (2) de commande de frein suivant la revendication 4, dans laquelle l'élément (50) de rappel est reçu dans une cage (46) disposée entre la transmission (44) autobloquante et l'élément (32) de manoeuvre.

6. Soupape (2) de commande de frein suivant la revendication 5, dans laquelle la cage (46) comprend une butée (70), qui limite un déplacement (40) relatif de l'élément (32) de manoeuvre par rapport à la cage (46).

7. Soupape (2) de commande de frein suivant l'une des revendications 4 à 6 précédentes, dans laquelle l'élément (50) de rappel est précontraint, notamment dans la cage (46).

8. Soupape (2) de commande de frein suivant l'une des revendications précédentes, dans laquelle la transmission (44) autobloquante est une transmission à vis sans fin.

9. Soupape (2) de commande de frein suivant l'une des revendications précédentes, comprenant une douille (26) ayant le siège (34) de la soupape pour séparer le raccord (16) de pression de commande de frein du raccord (18) de purge.

10. Frein de stationnement d'un véhicule utilitaire, conçu pour desserrer le véhicule utilitaire sur la base d'une pression (3) de commande de frein bistable, comprenant une soupape (2) de commande de frein suivant l'une des revendications précédentes pour sortir la pression (3) de commande de frein bistable.
